# FASCICULE DE BREVET EUROPEEN

(11) **EP 2 401 040 B1**
(45) Date de publication et mention de la délivrance du brevet: **09.01.2013**
(21) Numéro de dépôt: 10709912.9
(22) Date de dépôt: 25.02.2010
(51) Int. Cl.: A62B 35/00, B60R 22/30

(54) **DISPOSITIF D'AJUSTEMENT DE LA LONGUEUR D'UN LIEN SOUPLE, APPLICATION A UN BOITIER DE CONFORT POUR SANGLE DE HARNAIS**
VORRICHTUNG ZUM VERSTELLEN DER LÄNGE EINER FLEXIBLEN VERBINDUNG UND IHR EINSATZ IN EINEM BEQUEMEN GEHÄUSE FÜR EINEN GURTZEUGGURT
DEVICE FOR ADJUSTING THE LENGTH OF A FLEXIBLE LINK AND USE THEREOF IN A COMFORT HOUSING FOR A HARNESS STRAP

(30) Priorité: 27.02.2009 FR 0951280
(43) Date de publication de la demande: 04.01.2012
(73) Titulaire: Tractel S.A.S., 10100 Saint Hilaire sous Romilly (FR)
(72) Inventeur: VIEUX, Patrick, F-10430 Rosieres Pres Troyes (FR)
(74) Mandataire: Orsini, Fabienne
(86) Numéro de dépôt international: PCT/FR2010/050333
(87) Numéro de publication internationale: WO 2010/097555

(56) Documents cités:
- EP-A1- 0 902 710
- EP-A2- 0 629 530
- DE-A1- 2 419 193
- DE-C1- 4 105 725
- US-A1- 2004 095 004

## Description

La présente invention concerne un dispositif d'ajustement de la longueur apparente d'un lien souple. Elle a des applications diverses notamment dans le domaine de la sécurité et plus particulièrement de la retenue de personnes ou charges contre la chute. Elle peut encore s'appliquer à l'arrêt d'objets ou personnes en mouvement : lignes de vie, filets de retenue... Une application à un boîtier de confort pour sangle, notamment de harnais de sécurité, est présentée.

Dans le cadre des dispositifs anti-chute pour personnel travaillant en hauteur, on met en oeuvre des harnais qui sont portés par le personnel et reliés à des lignes de vie. Ce type de harnais doit être ajusté suffisamment serré pour éviter qu'il ne se défasse de la personne qui chute. Toutefois, un tel ajustement limite les possibilités de mouvement de la personne ou provoque une gène. On a donc proposé dans la demande EP 0 902 710 de mettre en oeuvre un harnais qui soit réalisé dans une matière qui présente une certaine élasticité sous faible contrainte mais avec une limite qui fait qu'en cas d'arrêt de chute, donc sous contrainte élevée, le harnais ait un comportement non élastique permettant une retenue efficace. Un tel harnais présente donc à la fois des caractéristiques de confort en ne limitant pas outre mesure les mouvements normaux de la personne et de sécurité en ayant un comportement d'arrêt de chute favorable.

Ce type de harnais présente toutefois certains inconvénients. Par exemple dans le cas où des matériaux élastiques sont mis en oeuvre dans le harnais, il peut se produire une dégradation des propriétés mécaniques au cours du temps même en l'absence de contrainte excessive du fait de processus physico-chimiques de vieillissement. De plus, ce type de harnais est plus complexe et coûteux à réaliser qu'un harnais classique réalisé dans un matériau ne présentant pas de propriétés élastiques.

On connaît également des dispositifs mécaniques d'ajustement par les demandes DE 2419193, EP 0 629 530 et US 2004/095004. Toutefois, ces dispositifs présentent certaines limitations comme notamment l'irréversibilité ou une absence de déplacement d'axes de déflexion.

Dans sa généralité, l'invention concerne un dispositif mécanique qui permet d'ajuster la longueur apparente d'un lien souple, ledit lien pouvant être cylindrique comme une drisse ou pouvant être plat comme une sangle. Pour cela le lien passe dans le dispositif en faisant au moins une boucle qui peut être plus ou moins étendue en fonction de la traction exercée sur le lien, un moyen de rappel tendant à augmenter l'étendue de la boucle et donc réduire la longueur apparente du lien en l'absence de traction sur ledit lien, étant mis en oeuvre. Il en résulte que le lien avec le dispositif de l'invention présente un comportement au moins d'allongement, et, de préférence globalement élastique, apparent alors que le lien en lui-même peut n'avoir aucune caractéristique d'extensibilité ou d'élasticité intrinsèque. Et même, de préférence, le lien ne présente pas de propriété d'élasticité propre et est pratiquement inextensible. L'invention est particulièrement intéressante dans des applications de sécurité.

Ainsi, l'invention concerne un dispositif d'ajustement de la longueur d'un lien souple en fonction de la traction exercée sur ledit lien, ledit lien continu traversant le dispositif entre deux extrémités d'entrée/sortie sensiblement opposées dudit dispositif.

Selon l'invention, le dispositif comporte des moyens pour réaliser au moins une boucle de lien dont l'étendue peut varier en fonction de la traction, au moins un moyen de rappel tendant à augmenter l'étendue de ladite boucle jusqu'à un maximum prédéfini en l'absence de traction sur ledit lien et ce qui correspond à une diminution de la longueur apparente du lien sur lequel est placé le dispositif, la traction du lien entraînant une diminution de l'étendue de la boucle jusqu'à un minimum prédéfini et ce qui correspond à un allongement de la longueur apparente du lien sur lequel est placé le dispositif.

Dans divers modes de mise en oeuvre de l'invention, les moyens décrits, pouvant être utilisés seuls ou selon toutes les combinaisons techniquement possibles, sont employés et notamment :
- le dispositif ne comporte qu'une boucle,
- la boucle est sensiblement plate,
- la boucle sensiblement plate s'étend dans un plan sensiblement étendu entre les deux extrémités d'entrée/sortie du dispositif,
- la boucle est sensiblement plate et s'étend dans un plan sensiblement étendu entre les deux extrémités d'entrée/sortie du dispositif,
- le lien est un lien textile ou un lien non textile,
- le lien non textile est métallique, (mono ou multibrins)
- le lien non textile est dans une matière synthétique, (mono ou multibrins)
- le lien textile est un tissé ou un non-tissé,
- le lien est dans une matière synthétique, notamment nylon, polyamide, polyester, etc. ou leurs combinaisons,
- le lien est dans une matière naturelle, notamment fibres de lin, coton, chanvre, etc. ou leurs combinaisons,
- le lien est un lien composite,
- le lien est un lien composite textile et non textile,
- le lien est un lien composite de tissé et non-tissé,
- le lien est un lien composite de matières synthétique et naturelle,
- le lien en lui-même est non élastique lors de sa traction,
- le lien en lui-même présente un comportement au moins partiellement élastique lors de sa traction,
- le lien en lui-même présente un comportement élastique en début de traction puis non élastique à la suite,
- le lien est plat (=sangle),
- le lien est cylindrique,
- le lien cylindrique est un toron,
- dans le cas d'un lien cylindrique, les axes de déflexion comportent des gorges,
- dans le cas d'un lien cylindrique, les axes de déflexion comportant des gorges sont des poulies,
- le lien est choisit parmi les liens cylindriques ou les liens plats (=sangles),
- le lien est plat et la boucle est ouverte,
- la boucle est ouverte, (de préférence pour un lien plat)
- la boucle est fermée, (facilement réalisable pour un lien cylindrique pour lequel le désaxement entre les deux extrémités de la boucle est au minimum égal au diamètre du lien)
- le dispositif comporte par boucle au moins deux axes de déflexion du lien, au moins un des axes étant mobile en translation et étant fonctionnellement solidaire dudit au moins un moyen de rappel,
- le moyen de rappel est élastique,
- le moyen de rappel est à mémoire de forme, (par exemple bloc de caoutchouc)
- le moyen de rappel est à mémoire de dimension,
- le moyen de rappel est un bloc de matériau élastique,
- le moyen de rappel est un ressort,
- le ressort travaille en extension, (au maximum d'étendue de la boucle, le/les ressorts est/sont de longueur réduite, spires approchées, et au minimum d'étendue de la boucle, le/les ressorts est/sont de longueur augmentée, en extension, spires éloignées)
- le ressort travaille en compression, (au maximum d'étendue de la boucle, le/les ressorts est/sont de longueur augmentée, spires éloignées, et au minimum d'étendue de la boucle, le/les ressorts est/sont de longueur réduite, spires rapprochées)
- le moyen de rappel est un ressort et le ressort travaille en extension : la traction du lien qui entraîne une diminution de l'étendue de la boucle provoquant une extension du ressort,
- le moyen de rappel est un ressort et le ressort travaille en compression : la traction du lien qui entraîne une diminution de l'étendue de la boucle provoquant une compression du ressort,
- chacun des deux axes de déflexion renvoi le lien dans une direction opposée à celle de l'autre axe,
- au moins un des axes de déflexion est mobile en rotation, (l'axe de déflexion immobilisé en translation et/ou le/les axes de déflexion mobiles en translation)
- le dispositif comporte une boucle en S, un premier axe de déflexion du lien étant immobilisé en translation et un second axe de déflexion étant mobile en translation et fonctionnellement solidaire dudit au moins un moyen de rappel, le/les moyens de rappels agissant entre un/des points fixes du dispositif et le second axe de déflexion,
- le dispositif comporte une boucle en oméga, un premier axe de déflexion du lien étant mobile en translation et fonctionnellement solidaire d'un premier dudit au moins un moyen de rappel, et un second axe de déflexion étant mobile en translation et fonctionnellement solidaire d'un second dudit au moins un moyen de rappel, et dans le cas où le premier et le second au moins un moyen de rappel sont indépendants, lesdits moyens de rappel agissent respectivement entre un/des points fixes du dispositif et leur axe de déflexion correspondant, et dans le cas où le premier et le second au moins un moyen de rappel sont un seul et même au moins moyens de rappel, le/lesdits moyens de rappel agissent entre les premier et second axes de déflexion.
- le dispositif à boucle en oméga, comporte en outre une plaque de réaction ou deux axes de déflexions d'oméga fixes, (les deux extrémités de la plaque de réaction ont la même fonction de renvoi de lien que les deux axes de déflexions d'oméga fixes)
- l'axe de déflexion mobile en translation l'est le long d'au moins un chemin de translation du dispositif,
- le dispositif comporte deux chemins de translation parallèles et opposés par axe de déflexion mobile en translation, lesdits chemins de translation recevant les deux extrémités opposées de l'axe de déflexion mobile en translation,
- le (les) extrémité(s) du chemin de translation correspondant au minimum prédéfini d'étendue de la boucle comporte(nt) une (des) butée(s),
- le dispositif comporte deux chemins de translation parallèles et opposés par axe de déflexion mobile en translation, lesdits chemins de translation recevant les deux extrémités opposées de l'axe de déflexion afin de permettre la mobilité avec guidage en translation dudit axe de déflexion,
- le dispositif comporte un boîtier sensiblement plat, la boucle étant disposée à l'intérieur dudit boîtier.

L'invention concerne également une application du dispositif de l'invention à la réalisation d'un boîtier de confort pour sangle de harnais, notamment de sécurité.

Dans diverses variantes, ledit boîtier de confort comporte une ou plusieurs des caractéristiques décrites dont les suivantes :
- le boîtier est formé d'un cadre et ses faces principales sont essentiellement ouvertes, (boîtier « squelette »)
- le boîtier est essentiellement fermé, (il présente des parois matérielles sur ses principales faces)
- le boîtier est en matière rigide,
- le boîtier est réalisé en matière plastique ou métallique ou composite,
- le boîtier est constitués de deux coques solidarisées ensembles, notamment par encliquetage et/ou soudage et/ou vissage, chacune des coques formant une des deux faces principales dudit boîtier,
- au moins une des extrémités d'entrée/sortie du lien est réalisée entre deux bords opposés appartenant respectivement aux deux coques,
- au moins une des extrémités d'entrée/sortie du lien est réalisée sous forme d'un orifice dans une paroi latérale d'une des deux coques, (orifice de paroi d'extrémité d'entrée/sortie de coque)
- les dimensions de passage des extrémités d'entrée/sortie du lien sont légèrement supérieures à celles du lien afin de réaliser un guidage dudit lien, (pour éviter que par exemple dans le cas d'un lien plat dont la traction n'est pas-axiale, de faire que des plis ou un enroulement sur lui-même du lien s'engagent dans le dispositif)
- le boîtier est sensiblement plan,
- au moins une des faces principales du boîtier est incurvée concave pour adaptation à l'épaule du porteur du harnais,
- le boîtier de confort est légèrement incurvé pour adaptation à l'épaule du porteur du harnais.

L'invention concerne ou présente également les caractéristiques suivantes :
- un dispositif permettant de faire varier la distance entre les deux extrémités d'un lien tel que sangle ou câble, formant une boucle, en forme de cadre et comportant deux axes transversaux reliés à leurs extrémités audit cadre et sur lesquels ledit lien s'enroule successivement dans un parcours en forme de « S », tel que l'un au moins des deux axes est relié audit cadre par un moyen de rappel de façon à permettre à cet axe un déplacement dans la direction de l'axe longitudinal du lien, de façon automatique et permanente sous l'effet d'une traction exercée à l'une ou aux deux extrémités du lien,
- un dispositif tel que le moyen de rappel entre l'axe mobile et le cadre est disposé de façon à travailler en compression,
- un dispositif tel que le moyen de rappel entre l'axe mobile et le cadre est disposé de façon à travailler en extension,
- un dispositif tel que le moyen de rappel reliant l'axe mobile au cadre est solidaire de l'une des extrémités longitudinales du cadre suivant l'axe du lien,
- un dispositif tel que le moyen de rappel reliant l'axe mobile au cadre comprend deux parties respectivement solidaires des parties latérales du cadre,
- un dispositif tel que les extrémités de l'axe mobile coulissent dans une lumière oblongue respectivement pratiquée dans chacune des deux parties latérales du cadre assurant une fonction de guidage de ces axes et de limite de leur course,
- le moyen de rappel est constitué de matériau élastique,
- le moyen de rappel est constitué de matériau à mémoire de forme,
- le moyen de rappel est constitué de matériau à mémoire de dimension,
- le moyen de rappel est constitué d'au moins un bloc de matériau élastique,
- le moyen de rappel est constitué d'au moins un ressort,
- un dispositif tel qu'il est disposé à l'extrémité du lien dont il relie cette extrémité à un moyen d'amarrage,
- la boucle du dispositif est réalisée avec une sangle rigide formant partie d'un harnais, l'extensibilité, voir l'élasticité, apportée par le dispositif à boucle étant calculée de façon à assurer une aisance de mouvements à la personne portant le harnais par allongement de la distance comprise entre les deux extrémités de la sangle et ladite boucle étant disposée à l'endroit ou aux endroits adéquats pour cet effet,
- la boucle est disposée sur une sangle élastique de façon à compléter l'élasticité de cette sangle,
- les deux axes sont mobiles sous l'effet d'un moyen de rappel.

L'invention s'applique en particulier à un harnais porté par un utilisateur, ledit harnais pouvant comporter des sangles, notamment bretelles, sur lesquelles des dispositifs d'ajustement sont placés. Les harnais sont des harnais classiques comme les harnais pour bébé, pour pilote d'avion ou bateau, pour conducteur automobile ou véhicule lourd, pour animaux, etc. ou des harnais de sécurité, en particulier anti-chutes. L'invention s'applique également à un lien relié à un utilisateur munit d'un harnais ou autre moyen de contention (par exemple lien type ligne de vie, laisse de chien...), un dispositif d'ajustement étant placé sur ledit lien.

L'invention concerne enfin un harnais à sangles, tel qu'au moins une des sangles comporte un dispositif d'ajustement de la longueur de lien selon l'une ou plusieurs des caractéristiques décrites, ledit dispositif étant dans un boîtier (le dispositif est dit « boîtier de confort »), et comportant des moyens pour réaliser au moins une boucle de sangle dont l'étendue peut varier en fonction de la traction sur la sangle, au moins un moyen de rappel tendant à augmenter l'étendue de ladite boucle jusqu'à un maximum prédéfini en l'absence de traction sur ladite sangle et ce qui correspond à une diminution de la longueur apparente de la sangle sur laquelle est placé le dispositif, la traction de la sangle entraînant une diminution de l'étendue de la boucle jusqu'à un minimum prédéfini et ce qui correspond à un allongement de la longueur apparente de la sangle sur laquelle est placé le dispositif.

La présente invention, sans qu'elle en soit pour autant limitée, va maintenant être exemplifiée avec la description qui suit de modes de réalisation et de mise en oeuvre en relation avec :
la Figure 1 qui est une vue latérale et en coupe d'un premier exemple de boîtier de confort (boucle en S) pour une sangle au repos, ne subissant pas de traction,
la Figure 2 qui est une vue frontale d'un premier exemple de boîtier de confort pour une sangle au repos, ne subissant pas de traction,
la Figure 3 qui est une vue perspective en éclaté d'un premier exemple de boîtier de confort, sans sa sangle,
la Figure 4 qui est une vue latérale et en coupe d'un premier exemple de boîtier de confort pour une sangle subissant une traction,
la Figure 5 qui est une vue frontale d'un premier exemple de boîtier de confort pour une sangle subissant une traction,
la Figure 6 qui est une vue latérale et en coupe d'un deuxième exemple de boîtier de confort (boucle en oméga) pour une sangle au repos, ne subissant pas de traction,
la Figure 7 qui est une vue frontale d'un deuxième exemple de boîtier de confort pour une sangle au repos, ne subissant pas de traction,
la Figure 8 qui est une vue perspective en éclaté d'un deuxième exemple de boîtier de confort, sans sa sangle,
la Figure 9 qui est une vue latérale et en coupe d'un deuxième exemple de boîtier de confort pour une sangle subissant une traction,
la Figure 10 qui est une vue frontale d'un deuxième exemple de boîtier de confort pour une sangle subissant une traction,
la Figure 11 qui est une vue dorsale d'un harnais de sécurité comportant des boîtiers de confort sur ses sangles d'épaules dans leurs parties dorsales,
la Figure 12 qui est une vue frontale du harnais de sécurité de la Figure 11.

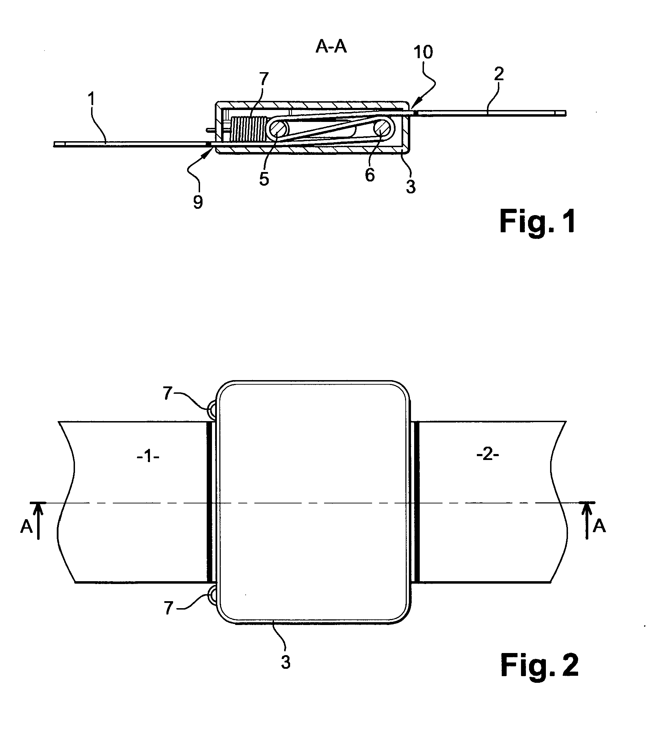

Dans ces Figures, le boîtier de confort du premier exemple comporte intérieurement une boucle en S de la sangle et dans le deuxième exemple, une boucle en oméga. Sur les Figures 1, 2, 4-7, 9, 10, on a représenté des repères fixes (lignes noires) dans la sangle de part et d'autre du boîtier de confort afin de montrer l'effet d'une traction et d'un relâchement (repos/absence de traction) sur ladite sangle.

Le boîtier de confort pour sangle de harnais qui va plus particulièrement être décrit en détail ci-après, apporte au moins une caractéristique d'allongement à la sangle qui l'utilise afin de garantir au porteur du harnais un certain confort d'utilisation.

Le boîtier de confort peut être positionné sur les sangles de bretelles en vue de garantir une liberté de mouvement du haut du corps. Plus généralement, le boîtier de confort peut également être positionné à tout autre endroit sur une sangle de harnais susceptible d'améliorer le confort d'utilisation d'un harnais. Le boîtier de confort peut être placé en ligne sur une sangle de largeur donnée et aucune intervention dommageable n'est nécessaire pour placer le boîtier sur la sangle. En particulier, la sangle n'ayant pas besoin d'être sectionnée ou modifiée d'autre manière. La mise en place du boîtier de confort n'altère en rien la résistance mécanique d'origine de la sangle.

L'effet d'allongement apportée par la mise en oeuvre du boîtier de confort est obtenue par la combinaison d'une trajectoire de sangle liée au contournement d'axe(s) de déflexion mobile(s) et/ou fixe et d'une éventuelle plaque de réaction suivant la configuration de boucle adoptée (en S ou oméga) et sur le/lesquels axes de déflexion mobiles sont accrochés des ressorts qui, lors de la traction sur la sangle tendant à réduire l'étendue de la boucle, engendrent une réaction de rappel. Le boîtier en lui-même n'est là que pour maintenir l'ensemble des pièces en position et permettre le guidage puis le blocage de la translation du/des axe(s) de déflexion en fin de course.

Cet effet d'allongement apparent du lien/de la sangle est obtenu lors de la traction sur le lien/la sangle. Le boîtier de confort apporte en plus, de préférence, un effet de raccourcissement apparent (après l'allongement) du lien/de la sangle lorsque la traction cesse. Ces effets d'allongement et de raccourcissement apparents du lien/de la sangle s'apparentent à un effet global d'élasticité apparente du lien/de la sangle.

Ainsi, le boîtier de confort se présente sous deux configurations particulières en fonction de la configuration de boucle adoptée : en S ou oméga.

Dans la configuration de boucle en S, un seul de deux axes de déflexion de sangle est mobile en translation. Le dispositif correspondant est représenté sur les Figures 1 à 5. Dans cette configuration, la sangle continue est passée dans le boîtier de confort et elle présente une partie amont 1 et une partie aval 2 par rapport au boîtier 3. Les qualificatifs amont et aval sont ici purement arbitraires et donnés pour faciliter les explications. La partie amont 1 de la sangle pénètre dans le boîtier à travers une extrémité d'entrée/sortie du boîtier, en l'espèce d'amont 9, et va s'enrouler sur environ un demi tour autour d'un l'axe de déflexion fixe 6 (non mobile en translation mais qui est, de préférence, mobile en rotation) après avoir traversé la plus grande partie du boîtier, puis, la sangle va s'enrouler à environ 180° autour d'un axe de déflexion 5 mobile en translation après être revenue vers l'extrémité d'entrée/sortie amont du boîtier, puis la sangle va ressortir par l'autre extrémité d'entrée/sortie du boîtier, en l'espèce d'aval 10, pour former la partie aval 2 de la sangle. Si, de préférence, l'axe de déflexion fixe 6 est mobile en rotation, cela peut également être le cas pour l'axe de déflexion mobile en translation 5.

Sur les Figures 1 et 2, aucune traction significative n'est imposée à la sangle entre ses parties amont et aval. Le dispositif est alors au repos et les deux axes de déflexion sont éloignés l'un de l'autre sous l'action de ressorts 7 agissant aux deux extrémités latérales de l'axe de déflexion 5 mobile en translation, ressorts tendant à tirer ledit axe 5 vers l'extrémité d'entrée/sortie amont 9 du boîtier pour que la boucle présente une étendue/extension maximale.

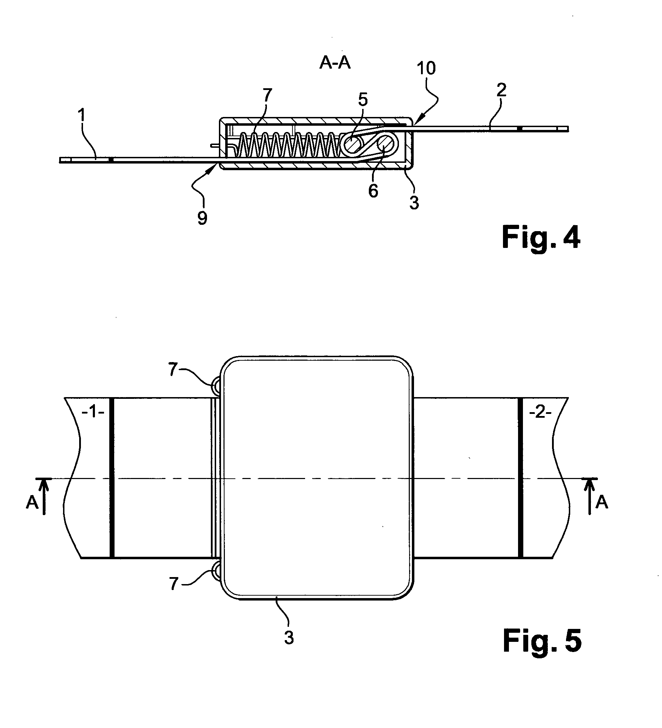

Sur les Figures 4 et 5, une traction est exercée sur les sangles entre leurs parties amont 1 et aval 2, par exemple parce que le porteur d'un harnais à sangles avec boîtier de confort effectue un mouvement. La sangle prend alors appuis sur l'axe de déflexion fixe 6 et par principe de « mouflage » déplace l'axe de déflexion mobile 5 en translation vers l'axe de déflexion fixe 6, en contrant l'action des ressorts 7, ce qui réduit l'étendue de la boucle et engendre donc un allongement apparent de la sangle (les repères de sangles sous forme de lignes noires s'éloignent l'un de l'autre). Lorsque la traction sur la sangle cesse, les ressorts 7 ramènent l'axe de déflexion mobile vers sa position initiale, ce qui entraîne une augmentation de l'étendue de la boucle et engendre donc un raccourcissement apparent de la sangle comme représenté Figures 1 et 2.

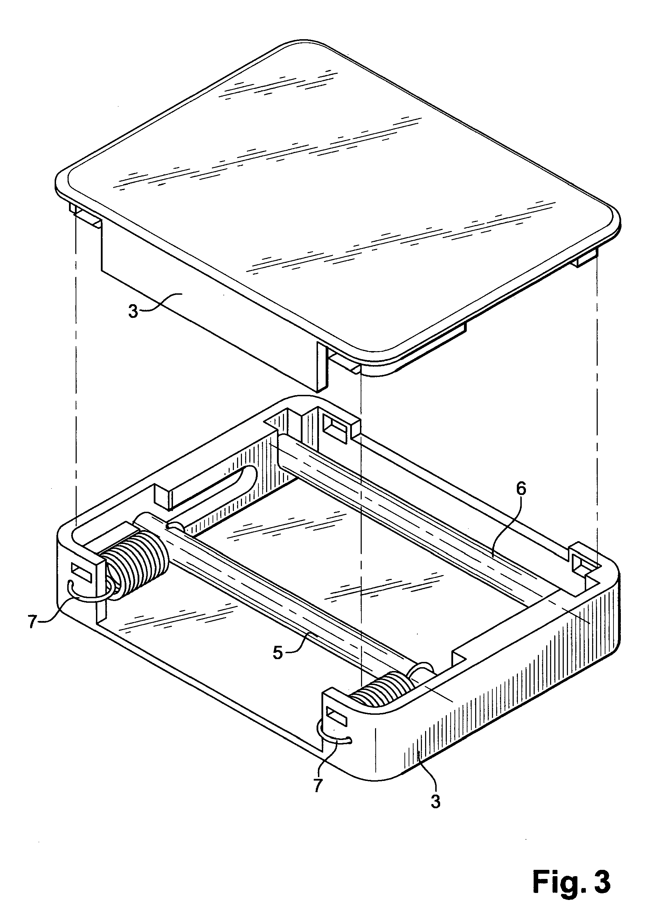

La Figure 3 permet de mieux voir la structure du boîtier de confort qui est réalisé en deux parties venant s'emboîter et s'encliqueter l'une dans l'autre et comportant intérieurement les axes de déflexions, fixe 6 et mobile en translation 5. Ce dernier axe 5 est guidé à ses deux extrémités dans des gorges (ou lumières) parallèles, une paire de gorges, de parois opposées du boîtier. Les ressorts 7 sont étendus entre des structures d'accrochage du boîtier et l'axe mobile en translation 5.

De préférence, la sangle présente une largeur sensiblement constante sur toute sa longueur afin notamment d'éviter d'éventuels problèmes de déviation, plis ou retournements de la sangle pouvant gêner le fonctionnement du boîtier de confort par exemple en cas de traction non axiale sur la sangle. Plus généralement, afin d'améliorer le guidage du lien aux entrées/sorties du boîtier et dans le boîtier, les orifices de passage du lien aux extrémités d'entrée/sortie sont ajustés à la taille (largeur et épaisseur pour une sangle et diamètre pour un câble) du lien et les axes de déflexion peuvent comporter des épaulements latéraux ou des gorges. A titre d'exemple, une sangle pour un harnais de sécurité présente une largeur d'environ 45 mm.

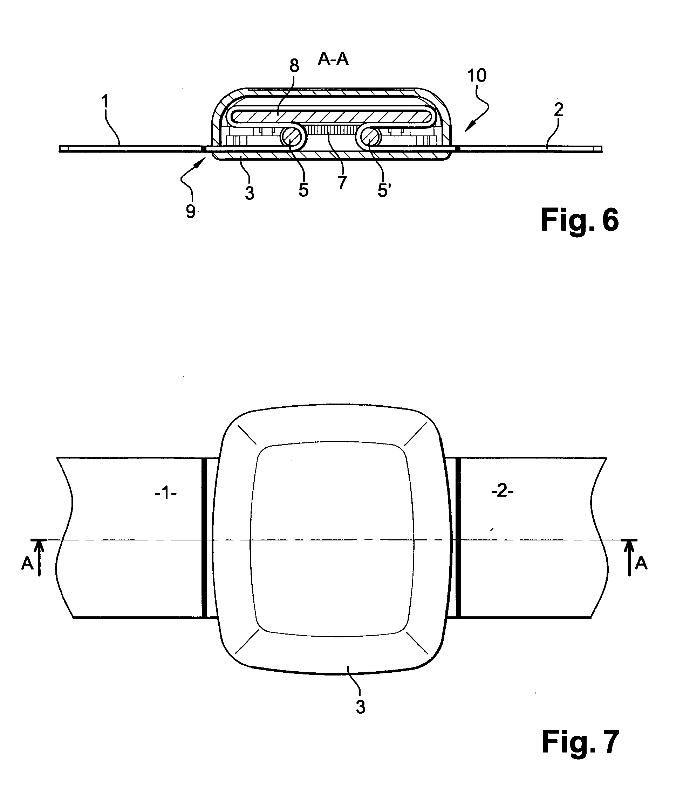

Dans la configuration de boucle en oméga, les deux axes de déflexion de sangle sont mobiles en translation. Le dispositif correspondant est représenté sur les Figures 6 à 10. Dans cette configuration, la sangle continue est passée dans le boîtier de confort et elle présente une partie amont 1 et une partie aval 2 par rapport au boîtier 3. Comme précédemment, les qualificatifs amont et aval sont ici purement arbitraires et donnés pour faciliter les explications. La partie amont 1 de la sangle pénètre dans le boîtier à travers une extrémité d'entrée/sortie du boîtier, en l'espèce d'amont 9, et va s'enrouler sur environ un demi tour autour d'un premier axe de déflexion mobile en translation 5, puis, la sangle va s'enrouler à environ 180° autour d'une première extrémité d'une plaque de réaction 8 puis aller s'enrouler à environ 180° autour de la seconde extrémité de ladite plaque de réaction 8 pour aller s'enrouler ensuite sur environ un demi tour autour d'un deuxième axe de déflexion 5' mobile en translation puis la sangle va ressortir par l'autre extrémité d'entrée/sortie du boîtier, en l'espèce d'aval 10, pour former la partie aval 2 de la sangle. Dans des variantes, le/les axes de déflexion mobiles en translation 5, 5' sont également mobiles en rotation.

On comprend bien que la fonction principale de la plaque d'appui 8 étant de procurer à ses deux extrémités des moyens de déflexion du chemin de la sangle, ladite plaque peut être remplacée par exemple par deux autres axes de déflexion dits d'oméga, fixes, disposés aux emplacements des extrémités de la plaque de réaction. Toutefois, la faible épaisseur de la plaque de réaction rend plus difficile la possibilité de coulissement de la sangle et donc les possibilités de déplacement du boîtier de confort le long de la sangle et on peut donc mettre en oeuvre une telle plaque de réaction si l'on souhaite rendre plus difficile le déplacement du boîtier de confort.

De préférence, on met en oeuvre un moyen permettant d'immobiliser totalement ou dans une certaine limite le boîtier de confort par rapport à la sangle afin d'éviter qu'il ne se déplace (trop) et puisse finalement venir se positionner en des emplacements gênants pour le porteur du harnais.

Sur les Figures 6 et 7, aucune traction significative n'est imposée à la sangle entre ses parties amont 1 et aval 2. Le dispositif est alors au repos et les deux axes de déflexion sont rapprochés l'un de l'autre sous l'action de ressorts 7, deux en l'espèce, agissant entre les extrémités latérales des axes de déflexion 5, 5' mobiles en translation, ressorts tendant à rapprocher lesdits axes 5, 5' pour que la boucle présente une étendue/extension maximale.

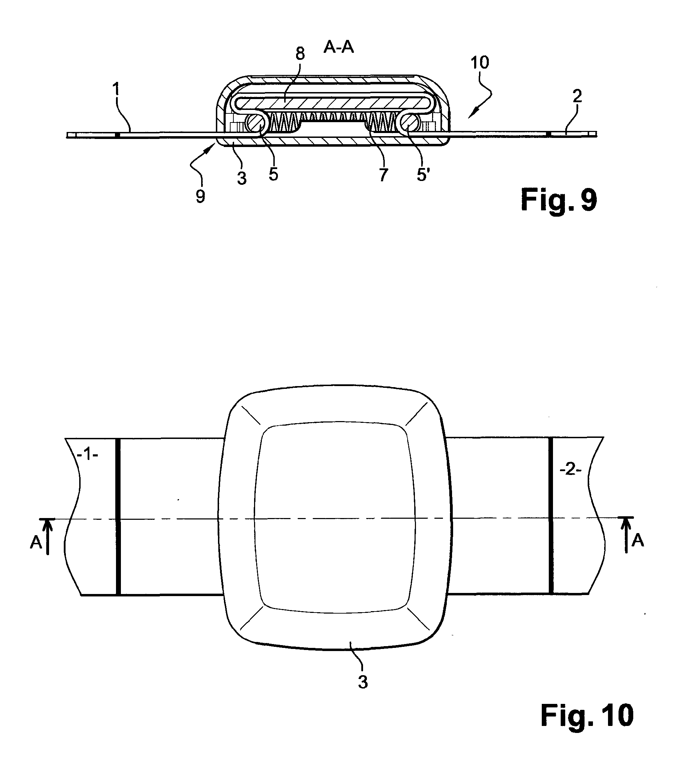

Sur les Figures 9 et 10, une traction est exercée sur les sangles entre leurs parties amont 1 et aval 2, par exemple parce que le porteur d'un harnais à sangles avec boîtier de confort effectue un mouvement. La sangle prend alors appuis sur la plaque de réaction 8 et par principe de « mouflage » déplace, en les écartant, les axes de déflexion mobiles 5 et 5' en translation en contrant l'action des ressorts 7, ce qui réduit l'étendue de la boucle et engendre donc un allongement apparent de la sangle (les repères de sangles sous forme de lignes noires s'éloignent l'un de l'autre). Lorsque la traction sur la sangle cesse, les ressorts ramènent les axes de déflexion mobiles vers leurs positions initiales, ce qui entraîne une augmentation de l'étendue de la boucle et engendre donc un raccourcissement apparent de la sangle comme représenté Figures 6 et 7.

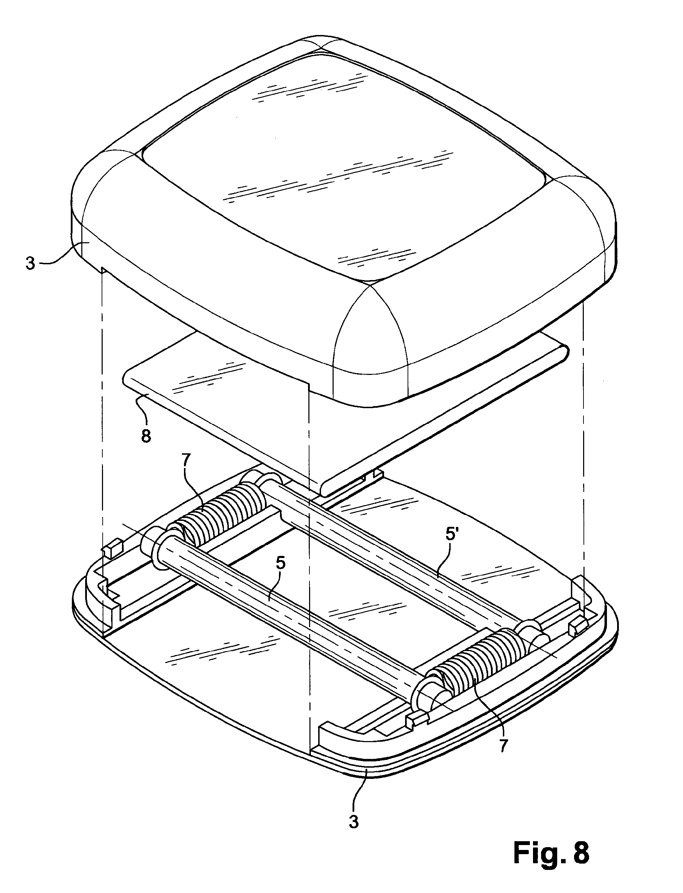

Comme on l'a vu, le boîtier est typiquement constitué de deux coques assemblées ensemble. De préférence, une des coques forme la plus grande partie du boîtier 3 et l'autre coque forme alors un couvercle 4. La structure du boîtier avec boucle en oméga est mieux visible sur la Figure 8 avec ses deux parties venant s'emboîter et s'encliqueter l'une dans l'autre et comportant intérieurement les axes de déflexions mobiles en translation 5 et 5' ainsi que la plaque de réaction 8. Les axes de déflexions 5 et 5' mobiles en translation sont guidés à leurs deux extrémités dans deux paires de gorges parallèles entre elles dans des parois opposées du boîtier. Les ressorts 7 sont étendus entre les axes de déflexions mobiles en translation 5 et 5'.

Dans les exemples présentés, le lien considéré qui est une sangle en l'espèce, sort de chaque coté du dispositif. Dans une variante, une extrémité du lien peut être fixée au dispositif et le dispositif comporter un moyen d'accrochage spécifique (crochet, patte de scellement, patte à visser, mousqueton...) permettant d'exercer ainsi une traction sur le lien. D'autre part, on a mentionné un état de repos du dispositif comme correspondant à une étendue de boucle maximale en l'absence de traction sur le lien. On comprend cependant que dans certaines applications le lien soit normalement en tension (l'étendue de la boucle est alors réduite) et que le dispositif sert alors à compenser (réduire la longueur apparente du lien) une baisse de la tension du lien. Dans d'autres applications, la tension sur le lien est normalement telle que l'étendue de la boucle est entre le minimum et le maximum d'étendue de la boucle, et il est alors possible de compenser dans les deux sens la longueur apparente du lien selon que la tension est augmentée ou réduite. De plus, les axes de déflexions, fixes (dont d'oméga) ou mobiles, peuvent être ou non mobiles en rotation selon la modalité de réalisation. De préférence, le boîtier ne comporte pas d'arrête vive extérieurement car il est au contact de l'utilisateur.

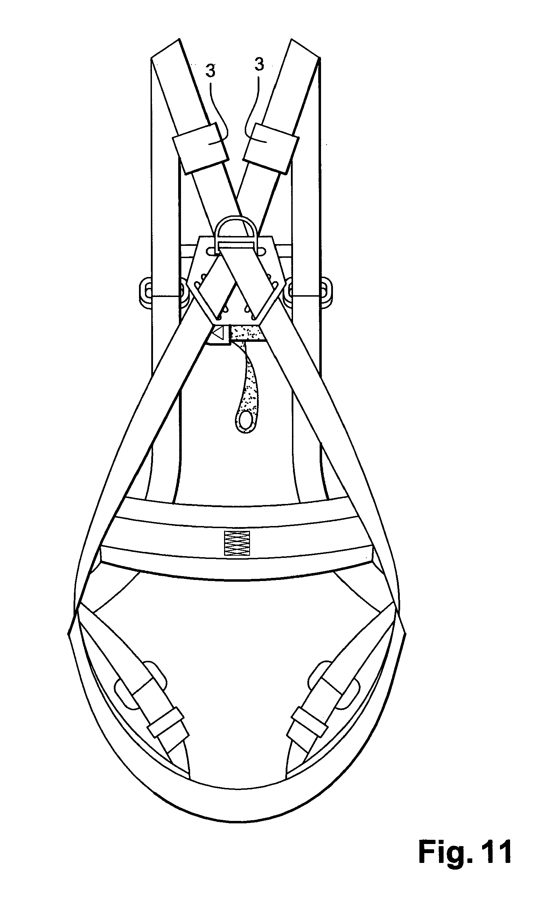

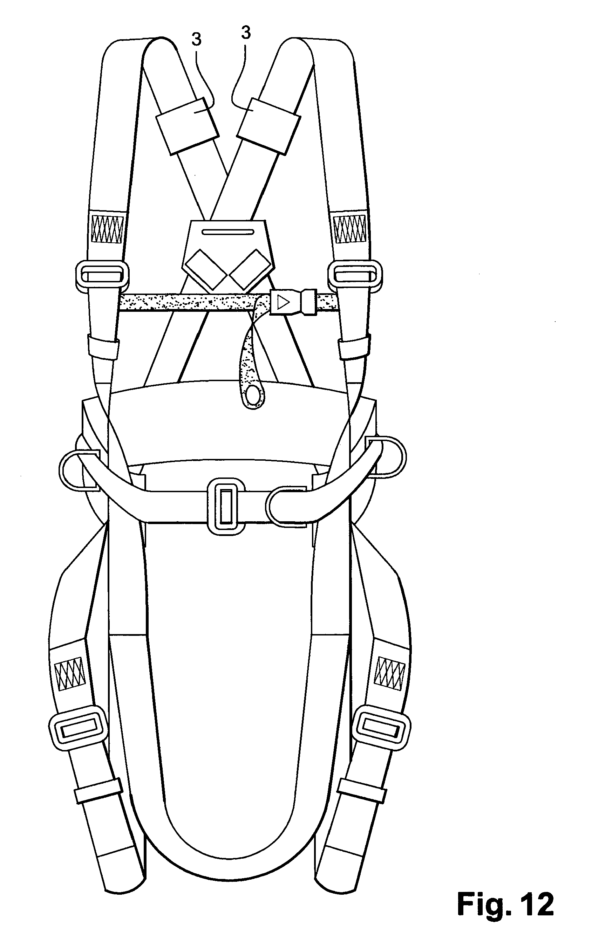

Une application du boîtier de confort à un harnais de sécurité anti-chute est représentée sur les Figures 11 et 12. Dans cette application, un boîtier de confort est disposé sur chacune des sangles de bretelles du harnais, dans le dos de l'utilisateur. De préférence, on met en oeuvre un moyen d'immobilisation du boîtier de confort le long de la sangle afin que cette dernière ne se déplace pas (trop) le long de la sangle lors de l'utilisation du harnais. Les sangles du harnais sont de préférence inextensibles (dans une matière non élastique) dans cette application et le boîtier de confort apporte une élasticité apparente aux sangles de bretelles.

## Revendications

1. Dispositif d'ajustement de la longueur d'un lien (1, 2) souple en fonction de la traction exercée sur ledit lien, ledit lien continu traversant le dispositif entre deux extrémités d'entrée/sortie sensiblement opposées dudit dispositif,
le dispositif comportant des moyens pour réaliser au moins une boucle de lien dont l'étendue peut varier en fonction de la traction et au moins un moyen de rappel (7) tendant à augmenter l'étendue de ladite boucle jusqu'à un maximum prédéfini en l'absence de traction sur ledit lien, ce qui correspond à une diminution de la longueur apparente du lien sur lequel est placé le dispositif, la traction du lien entraînant une diminution de l'étendue de la boucle jusqu'à un minimum prédéfini, ce qui correspond à un allongement de la longueur apparente du lien sur lequel est placé le dispositif, **caractérisé en ce que** le dispositif est réversible, la cessation de la traction ramenant l'étendue de ladite boucle jusqu'au maximum prédéfini, ladite boucle étant sensiblement plate et s'étendant dans un plan sensiblement étendu entre les deux extrémités d'entrée/sortie du dispositif, et **en ce qu'**il comporte par boucle au moins deux axes de déflexion du lien, au moins un des axes étant mobile en translation et étant fonctionnellement solidaire dudit au moins un moyen de rappel, lesdits axes s'écartant ou se rapprochant pour faire varier l'étendue de la boucle.

2. Dispositif selon la revendication 1, **caractérisé en ce que** le moyen de rappel est un ressort et le ressort travaille en extension : la traction du lien qui entraîne une diminution de l'étendue de la boucle provoquant une extension du ressort.

3. Dispositif selon la revendication 1 ou 2, **caractérisé en ce que** le lien est choisit parmi les liens cylindriques ou les liens plats.

4. Dispositif selon la revendication 1, 2 ou 3, **caractérisé en ce qu'**il comporte une boucle en S, un premier axe de déflexion (6) du lien étant immobilisé en translation et un second axe de déflexion (5) étant mobile en translation et fonctionnellement solidaire dudit au moins un moyen de rappel (7), le/les moyens de rappels agissant entre un/des points fixes du dispositif et le second axe de déflexion.

5. Dispositif selon la revendication 1, 2 ou 3, **caractérisé en ce qu'**il comporte une boucle en oméga, un premier axe de déflexion (5) du lien étant mobile en translation et fonctionnellement solidaire d'un premier dudit au moins un moyen de rappel, et un second axe de déflexion (5') étant mobile en translation et fonctionnellement solidaire d'un second dudit au moins un moyen de rappel,
et **en ce que** dans le cas où le premier et le second au moins un moyen de rappel sont indépendants, lesdits moyens de rappel agissent respectivement entre un/des points fixes du dispositif et leur axe de déflexion correspondant
et **en ce que** dans le cas où le premier et le second au moins un moyen de rappel sont un seul et même au moins moyens de rappel, le/lesdits moyens de rappel agissent entre les premier et second axes de déflexion.

6. Dispositif selon la revendication 5, **caractérisé en ce qu'**il comporte en outre une plaque de réaction ou deux axes de déflexions d'oméga fixes.

7. Dispositif selon l'une quelconque des revendications précédentes, **caractérisé en ce qu'**il comporte deux chemins de translation parallèles et opposés par axe de déflexion mobile en translation, lesdits chemins de translation recevant les deux extrémités opposées de l'axe de déflexion afin de permettre la mobilité avec guidage en translation dudit axe de déflexion.

8. Dispositif selon l'une quelconque des revendications précédentes, **caractérisé en ce qu'**il est dans un boîtier sensiblement plat, la boucle étant disposée à l'intérieur dudit boîtier.

9. Dispositif selon la revendication 8, **caractérisé en ce que** le boîtier est constitué de deux coques solidarisées ensembles, chacune des coques formant une des deux faces principales dudit boîtier.

10. Harnais à sangles, **caractérisé en ce qu'**au moins une des sangles comporte un dispositif d'ajustement de la longueur de lien selon au moins la revendication 3 des revendications précédentes, ledit dispositif étant dans un boîtier et comportant des moyens pour réaliser au moins une boucle de sangle dont l'étendue peut varier en fonction de la traction sur la sangle, au moins un moyen de rappel (7) tendant à augmenter l'étendue de ladite boucle jusqu'à un maximum prédéfini en l'absence de traction sur ladite sangle et ce qui correspond à une diminution de la longueur apparente de la sangle sur laquelle est placé le dispositif, la traction de la sangle entraînant une diminution de l'étendue de la boucle jusqu'à un minimum prédéfini et ce qui correspond à un allongement de la longueur apparente de la sangle sur laquelle est placé le dispositif.

## Claims

1. A device for adjusting the length of a flexible link (1, 2) according to the pulling force exerted on said link, said continuous link passing through the device between two substantially opposite input/output ends of said device,
the device including means for producing at least on link loop whose extent can vary according to the pulling force and at least one return means (7) tending to increase the extent of said loop up to a predefined maximum in the absence of pulling force on said link, which corresponds to a reduction of the apparent length of the link on which the device is the pulling force of the link resulting in a reduction of the extent of the loop up to a predefined minimum, which corresponds to an elongation of the apparent length of the link on which the device is placed, **characterized in that** the device is reversible, the cessation of the pulling force returning the extent of said loop to the predefined maximum, said loop being substantially flat and extending in a substantially extended plane between the two input/output ends of the device, and **in that** it includes, for each loop, at least two link deflection axes, at least one of the axes being mobile in translation and being functionally attached to said at least one return means, said axes moving apart or together to vary the extent of the loop.

2. The device as claimed in claim 1, **characterized in that** the return means is a spring and the spring works by extension: the pulling force of the link which results in a reduction of the extent of the loop causing an extension of the spring.

3. The device as claimed in claim 1 or 2, **characterized in that** the link is chosen from cylindrical links or flat links.

4. The device as claimed in claim 1, 2 or 3, **characterized in that** it includes an S loop, a first deflection axis (6) of the link being immobilized in translation and a second deflection axis (5) being mobile in translation and functionally attached to said at least one return means (7), the return mean(s) acting between one or more fixed points of the device and the second deflection axis.

5. The device as claimed in claim 1, 2 or 3, **characterized in that** it includes an omega loop, a first deflection axis (5) of the link being mobile in translation and functionally attached to a first of said at least one return means, and a second deflection axis (5') being mobile in translation and functionally attached to a second of said at least one return means,
and **in that**, in the case where the first and the second at least one return means are independent, said return means act respectively between one or more fixed points of the device and their corresponding deflection axis
and **in that**, in the case where the first and the second at least one return means are at least one and the same return means, said return mean(s) act between the first and second deflection axes.

6. The device as claimed in claim 5, **characterized in that** it also includes a reaction plate or two fixed omega deflection axes.

7. The device as claimed in any one of the preceding claims, **characterized in that** it includes two parallel and opposite translation paths for each deflection axis mobile in translation, said translation paths receiving the two opposite ends of the deflection axis in order to allow mobility with translational guidance of said deflection axis.

8. The device as claimed in any one of the preceding claims, **characterized in that** it is in a substantially flat unit, the loop being arranged inside said unit.

9. The device as claimed in claim 8, **characterized in that** the unit consists of two shells joined together, each of the shells forming one of the two main faces of said unit.

10. A strap harness, **characterized in that** at least one of the straps includes a device for adjusting the link length according to at least claim 3 of the preceding claims, said device being in a unit and including means for producing at least one strap loop whose extent can vary according to the pulling force on the strap, at least one return means (7) tending to increase the extent of said loop up to a predefined maximum in the absence of pulling force on said strap and which corresponds to a reduction of the apparent length of the strap on which the device is placed, the pulling force of the strap resulting in a reduction of the extent of the loop up to a predefined minimum and which corresponds to an elongation of the apparent length of the strap on which the device is placed.

## Patentansprüche

1. Vorrichtung zum Verstellen der Länge einer flexiblen Verbindung (1, 2) in Abhängigkeit von dem auf die Verbindung ausgeübten Zug, wobei die ununterbrochene Verbindung die Vorrichtung zwischen zwei Eingangs-/Ausgangsenden, die der Vorrichtung im Wesentlichen entgegengesetzt sind, durchquert,
wobei die Vorrichtung Mittel zum Hersfellen mindestens einer Verbindungsschleife aufweist, deren Ausmaß in Abhängigkeit von dem Zug variieren kann, und mindestens ein Rückstellmittel (7), das dazu tendiert, das Ausmaß der Schleife bei Fehlen von Zug an der Verbindung bis zu einem vorbestimmten Maximum zu erhöhen, was einer Verringerung der sichtbaren Länge der Verbindung entspricht, auf der die Vorrichtung platziert ist, wobei der Zug der Verbindung eine Verringerung des Ausmaßes der Schleife bis zu einem vordefinierter Minimum bewirkt, was einer Verlängerung der sichtbaren Länge der Verbindung, auf der die Vorrichtung platziert ist, entspricht, **dadurch gekennzeichnet, dass** die Vorrichtung umkehrbar ist, wobei das Aufhören des Zugs das Ausmaß der Schleife bis zu einem vordefinierten Maximum zurückbringt, wobei die Schleife im Wesentlichen flach ist und sich in einer Ebene erstreckt, die sich im Wesentlichen zwischen den zwei Eingangs-/ausgangsende der Vorrichtung erstreckt, und dass sie pro Schleife mindestens zwei Ablenkachsen der Verbindung aufweist, wobei mindestens eine der Achsen in Verschiebung beweglich ist und funktional fest mit dem mindestens einen Rückstellmittel verbunden ist, wobei sich die Achsen voneinander beabstanden oder einander nähern, um das Ausmaß der Schleife variieren zu lassen.

2. Vorrichtung nach Anspruch 1, **dadurch gekennzeichnet, dass** das Rückstellmittel eine Feder ist, und dass die Feder in Dehnung arbeitet: der Zug der Verbindung, der eine Verringerung des Ausmaßes der Schleife bewirkt, verursacht eine Verlängerung der Feder.

3. Vorrichtung nach Anspruch 1 oder 2, **dadurch gekennzeichnet, dass** die Verbindung aus den zylindrischen Verbindungen oder den flachen Verbindungen ausgewählt ist.

4. Vorrichtung nach Anspruch 1, 2 oder 3, **dadurch gekennzeichnet, dass** sie eine S-Schleife ausweist, wobei eine erste Ablenkachse (6) der Verbindung in Verschiebung stillgestellt ist und eine zweite Ablenkachse (5) in Verschiebung beweglich und funktional fest mit dem mindestens einen Rückstellmittel (7) verbunden ist, wobei das/die Rückstellmittel zwischen einem/mehreren Fixpunkten der Vorrichtung und der zweiten Ablenkachse wirken.

5. Vorrichtung nach Anspruch 1, 2 oder 3, **dadurch gekennzeichnet, dass** sie eine Omega-förmige Schleife aufweist, wobei eine erste Ablenkachse (5) der Verbindung in Verschiebung beweglich und funktional fest mit einem ersten des mindestens einen Rückstellmittels verbunden ist, und eine zweite Ablenkachse (5') in Verschiebung beweglich und funktional fest mit einem zweiten des mindestens einen Rückstellmittels verbunden ist,
und dass in dem Fall, in dem das erste und zweite mindestens eine Rückstellmittel unabhängig sind, die Rückstellmittel jeweils zwischen einem/mehreren Fixpunkten der Vorrichtung und ihrer jeweiligen Ablenkachse wirken,
und dass, in dem Fall, in dem das erste und das zweite mindestens eine Rückstellmittel ein und dasselbe mindestens eine Rückstellmittel sind, das/die Rückstellmittel zwischen der ersten und der zweiten Ablenkachse wirkten.

6. Vorrichtung nach Anspruch 5, **dadurch gekennzeichnet, dass** sie ferner eine Reaktionsplatte oder zwei stationäre Omega-Ablenkachsen aufweist.

7. Vorrichtung nach einem der vorhergehenden Ansprüche, **dadurch gekennzeichnet, dass** sie zwei Verschiebungswege aufweist, die parallel und pro in Verschiebung beweglicher Ablenkachse entgegengesetzt sind, wobei die Verschiebungswege die zwei entgegengesetzten Enden der Ablenkachse aufnehmen, um die Mobilität der Ablenkachse mit Führung in Verschiebung zu erlauben.

8. Vorrichtung nach einem der vorhergehenden Ansprüche, **dadurch gekennzeichnet, dass** sie sich in einem im Wesentlichen flachen Gehäuse befindet wobei die Schleife innerhalb des Gehäuses angeordnet ist.

9. Vorrichtung nach Anspruch 8, **dadurch gekennzeichnet, dass** das Gehäuse aus zwei fest miteinander verbundenen Schalen besteht, wobei jede der Schalen eine der zwei Hauptseiten des Gehäuses bildet.

10. Harnisch mit Gurten, **dadurch gekennzeichnet, dass** mindestens einer der Gurte eine Einstellvorrichtung der Verbindungslänge mindestens nach Anspruch 3 der vorhergehenden Ansprüche ausweist, wobei sich die Vorrichtung in einem Gehäuse befindet und Mittel aufweist, um mindestens eine Gurtschleife zu bilden, deren Ausmaß in Abhängigkeit von dem Zug an dem Gurt variieren kann, wobei mindestens ein Rückstellmittel (7) dazu tendiert, das Ausmaß der Schleife bis zu einem vorbestimmten Maximum bei Fehlen von Zug an dem Gurt zu erhöhen, was einer Verringerung der sichtbaren Länge des Gurts entspricht, auf dem die Vorrichtung platziert ist, wobei der Zug an dem Gurt eine Verringerung des Ausmaßes der Schleife bis zu einem vorbestimmten Minimum bewirkt, was einer Verlängerung der sichtbaren Länge des Gurts, auf dem die Vorrichtung platziert ist, entspricht.
